# EUROPEAN PATENT SPECIFICATION

(11) **EP 2 530 411 B1**
(45) Date of publication and mention of the grant of the patent: **25.10.2017**
(21) Application number: 11736767.2
(22) Date of filing: 24.01.2011
(51) Int. Cl.: F25B 47/02, F25B 1/00, F25B 5/00, F25B 13/00

(54) **REFRIGERATION CYCLE EQUIPMENT**
KÄLTEKREISLAUFVORRICHTUNG
APPAREIL À CYCLE FRIGORIFIQUE

(30) Priority: 26.01.2010 JP 2010014266
(43) Date of publication of application: 05.12.2012
(73) Proprietor: Panasonic Corporation, Kadoma-shi Osaka 571-8501 (JP)
(72) Inventor: SUGIO, Takashi, Osaka 540-6207 (JP); KAMODA, Hirokazu, Osaka 540-6207 (JP); KAWAZOE, Daisuke, Osaka 540-6207 (JP); KUBO, Tsugio, Osaka 540-6207 (JP); SHIMIZU, Akihiko, Osaka 540-6207 (JP)
(74) Representative: Eisenführ Speiser
(86) International application number: PCT/JP2011/000355
(87) International publication number: WO 2011/093050

(56) References cited:
- EP-A2- 1 645 817
- JP-A- 3 031 666
- JP-A- 4 203 776
- JP-A- 6 074 618
- JP-A- 9 026 213
- JP-A- 10 332 216
- JP-A- 60 175 976
- JP-A- 62 019 652
- JP-A- 2008 241 127
- JP-U- H0 361 267
- JP-U- H0 361 267
- US-A- 4 727 726

## Description

### Technical Field

The present invention relates to refrigeration cycle equipment including a compressor, an indoor heat exchanger, an expansion valve, and an outdoor heat exchanger, all connected in series via refrigerant piping and, in particular, to refrigeration cycle equipment capable of enhancing the reliability of the compressor during defrosting.

### Background Art

A conventional heat pump air conditioner conducts defrosting during heating by switching a four-way valve from a heating cycle to a cooling cycle when frost has been formed on an outdoor heat exchanger. In this defrosting method, an indoor fan is at a stop, but cold air flows gradually out of an indoor unit, thus posing a problem of warmth being lost.

In view of this, another air conditioner has been proposed having a heat storage tank mounted on a compressor in an outdoor unit for the purpose of defrosting by making use of waste heat of the compressor that has been stored in the heat storage tank during heating (see, for example, JP 3-031666 A (Patent Document 1)).

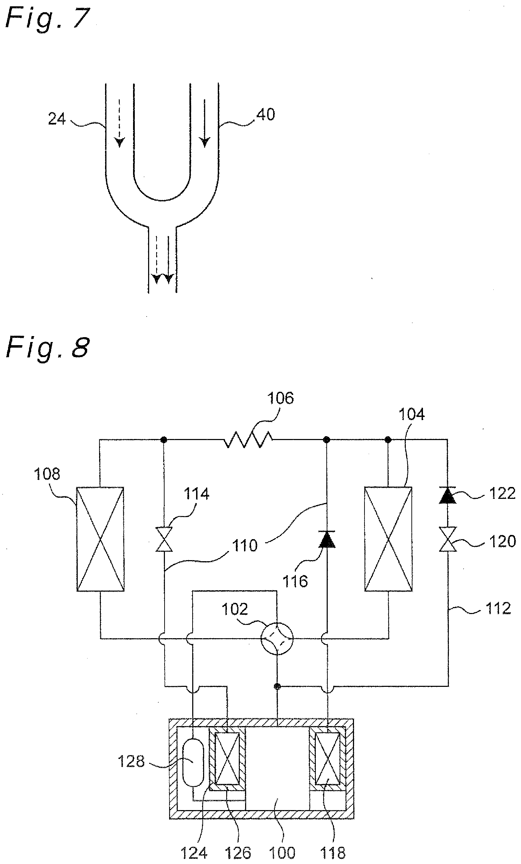

Fig. 8 depicts an example of refrigeration cycle equipment employing such a defrosting method. This refrigeration cycle equipment includes an outdoor unit, in which a compressor 100, a four-way valve 102, an outdoor heat exchanger 104, and a capillary tube 106 are provided, and an indoor unit in which an indoor heat exchanger 108 is provided. All of the compressor 100, the four-way valve 102, the outdoor heat exchanger 104, the capillary tube 106, and the indoor heat exchanger 108 are connected via refrigerant piping. The refrigeration cycle equipment also includes a first bypass circuit 110 for bypassing the capillary tube 106 and a second bypass circuit 112 having one end connected to a pipe extending from a discharge side of the compressor 100 to the indoor heat exchanger 108 via the four-way valve 102 and the other end connected to another pipe extending from the capillary tube 106 to the outdoor heat exchanger 104. The first bypass circuit 110 includes a two-way valve 114, a check valve 116, and a heat storage heat exchanger 118, while the second bypass circuit 112 includes a two-way valve 120 and a check valve 122.

Furthermore, a heat storage tank 124 is provided around the compressor 100, and a latent heat storage material 126 for heat exchanging with the heat storage heat exchanger 118 is filled in the heat storage tank 124.

In this refrigeration cycle, the two two-way valves 114, 120 are opened during defrosting to allow part of a refrigerant discharged from the compressor 100 to flow into the second bypass circuit 112 and the remaining refrigerant to flow into the indoor heat exchanger 108 via the four-way valve 102. The refrigerant that has passed through the indoor heat exchanger 108 is used for heating, and a slight amount of the refrigerant then flows into the outdoor heat exchanger 104 via the capillary tube 106, while the remaining majority of the refrigerant flows into the first bypass circuit 110 and into the heat storage heat exchanger 118 via the two-way valve 114 to take heat from the heat storage material 126, and then passes through the check valve 116 to join the refrigerant that has passed through the capillary tube 106 before the refrigerant flows into the outdoor heat exchanger 104. Thereafter, the refrigerant flowing toward the outdoor heat exchanger 104 joins the refrigerant that has passed through the second bypass circuit 112 at an inlet of the outdoor heat exchanger 104 to conduct defrosting by making use of heat contained in the refrigerant. After the defrosting, the refrigerant passes through the four-way valve 102 and then enters the compressor 100.

In this refrigeration cycle, the second bypass circuit 112 acts to introduce a hot gas discharged from the compressor 100 during defrosting to the outdoor heat exchanger 104 and to maintain high the pressure of the refrigerant flowing into the outdoor heat exchanger 104, thus making it possible to enhance the defrosting capability and complete the defrosting within a considerably short period of time.
Similar refrigeration cycle apparatuses are known from JP 04-203776 A (Patent Document 2) and JP H03-61267 U (Patent Document 3). From US 4,727,726 A (Patent Document 4), a refrigeration cycle apparatus is known that stores excess heat that may be used for defrosting. Therefore, the refrigeration cycle apparatus includes a heat accumulating unit for accumulating an excess heat generated during the operation of a refrigeration cycle main unit and radiating the accumulated heat at a desired time. The accumulating unit includes a heat accumulating container and latent heat accumulating material housed in the container. The material has a predetermined phase transition temperature and a supercooling state release temperature which is lower than the phase transition temperature. The material maintains a supercooling state at a temperature between the phase transition temperature and the supercooling state release temperature. When the material is cooled by a release mechanism to a temperature below the supercooling state release temperature, the supercooling state of the material is released and the material radiates the accumulated heat. The radiated heat is used for heating the refrigerant to be sent a compressor at the start of the heating or defrosting operation of the main unit.
And also provides a further example of an air conditioner capable of running a cooling cycle by a simple bypass circuit and also capable of running a defrost cycle while continuously heating indoor ambient. This air conditioner includes a cooling cycle provided by connecting a compressor, a four-way valve, an indoor heat exchanger, a decompressor and an outdoor heat exchanger with a coolant circuit; a first bypass circuit for connecting a point between
the indoor heat exchanger and the decompressor to a suction part of the compressor; and a second bypass circuit for connecting a point between the four-way valve and the indoor heat exchanger or a point between the compressor and the four-way valve to a point between the decompressor and the outdoor heat exchanger. The outdoor heat exchanger is defrosted, a first bypass operation for allowing coolant heated by the coolant heater to flow to the suction part of the compressor and a second bypass operation for allowing coolant to flow through the outdoor heat exchanger.

### Patent Document(s)

Patent Document 1: No. JP 3-31666 A
Patent Document 2: No. JP 04-203776 A
Patent Document 3: No. JP H03-61267 U
Patent Document 4: No. US 4,727,726 A
Patent Document 5: No. EP 1 645 817 A2
JP04203776A aims to accumulate a heating calorie in a heat accumulative tank within a short period of time and increase a defrosting capability by a method wherein a heat pump type air condition is provided with a bypassing circuit of which one end is connected to a discharging pipe extending from a discharged side of a compressor to a four-way valve and the other end is connected from the four-way valve to an indoor heat exchanger, and the bypassing circuit is connected to the heat accumulative tank in a heat exchanging manner. According to JP04203776A this purpose is achieved as follows: During a heating operation, the second two-way valve is opened, one refrigerant from a compressor is flowed to a four-way valve and the other refrigerant passes through the second two-way valve and gives heat to a heat accumulative material of a heat accumulative tank. The other refrigerant is merged with refrigerant passed through the four-way valve and flows toward an indoor heat exchanger. A two-way valve is closed. During a defrosting operation, the second two-way valve is closed, the two-way valve is opened, the refrigerant is flowed in the first bypassing circuit, heat is removed by a heat accumulative material, the refrigerant passes through a check valve, the refrigerant is merged with the refrigerant passed through a pressure reducing device and then the refrigerant is flowed toward an outdoor heat exchanger. After defrosting operation, the refrigerant passes through the four-way valve and is absorbed into the compressor. In this way, heat radiated from the compressor toward the surrounding air and heat from hot refrigerant heat in the second bypassing circuit are concurrently recovered, heat can be accumulated in the heat accumulative tank within a short period of time and then heating calorie required during a defrosting operation can be sufficiently assured.

### Summary of the Invention

### Problems to be solved by the Invention

In general, the conventional refrigeration cycle is provided, on a refrigerant suction side of the compressor 100, with an accumulator 128 for separating a liquid phase refrigerant and a gas phase refrigerant from each other. The liquid phase refrigerant from the outdoor heat exchanger 104 is introduced into the accumulator 128, and the gas phase refrigerant separated by the accumulator 128 is supplied to the compressor 100. However, if only the refrigerant from the outdoor heat exchanger 104 is introduced into the accumulator 128, there is a possibility that part of the liquid phase refrigerant from the accumulator 128 may return to the compressor 100, thus resulting in a reduction in reliability of the compressor.

The present invention has been developed to overcome the above-described disadvantage.

It is accordingly an objective of the present invention to provide refrigeration cycle equipment capable of enhancing the reliability of the compressor by minimizing return of the liquid phase refrigerant to the compressor.

### Means to Solve the Problems

In accomplishing the above objective, the refrigeration cycle equipment according to the present invention includes a compressor, an indoor heat exchanger connected to the compressor, an expansion valve connected to the indoor heat exchanger, an outdoor heat exchanger connected to the expansion valve, and a four-way valve through which the outdoor heat exchanger is connected to the compressor. The refrigeration cycle equipment also includes a heat storage material disposed around the compressor to store heat generated by the compressor, a heat storage heat exchanger operable to heat exchange with heat stored in the heat storage material, a first pipe for connecting the compressor to the indoor heat exchanger, a second pipe for connecting the indoor heat exchanger to the expansion valve, a third pipe for connecting the expansion valve to the outdoor heat exchanger, a fourth pipe for connecting the outdoor heat exchanger to the compressor, a fifth pipe for connecting the compressor to the third pipe, a sixth pipe for connecting the second pipe to the heat storage heat exchanger, and a seventh pipe for connecting the heat storage heat exchanger to the fourth pipe to introduce a refrigerant from the heat storage heat exchanger to the fourth pipe. In a defrosting operation for defrosting the outdoor heat exchanger, a refrigerant discharged from the compressor is introduced to the outdoor heat exchanger and to the heat storage heat exchanger via the indoor heat exchanger, and a refrigerant having passed through the outdoor heat exchanger and another refrigerant heat exchanged with the heat storage material in the heat storage heat exchanger join at a location between the four-way valve and a suction side of the compressor and are subsequently introduced to the suction side of the compressor. The refrigeration cycle equipment further comprises an accumulator provided on the fourth pipe to separate a liquid phase refrigerant and a gas phase refrigerant, wherein the seventh pipe is connected to a pipe extending between the accumulator and the compressor.

### Effects of the Invention

According to the present invention, because a gas phase refrigerant from the heat storage heat exchanger joins a refrigerant returning to the compressor from the outdoor heat exchanger in the defrosting operation for defrosting the outdoor heat exchanger, a refrigerant containing the liquid refrigerant returning from the outdoor heat exchanger is admixed with the high-temperature gas phase refrigerant returning from the heat storage heat exchanger. As a result, evaporation of the liquid refrigerant is promoted to thereby prevent the liquid refrigerant from returning to the compressor, thus making it possible to enhance the reliability of the compressor.

### Brief Description of the Drawings

Fig. 1 is a piping diagram of an air conditioner having refrigeration cycle equipment according to an embodiment of the present invention.
Fig. 2 is a piping diagram of the air conditioner of Fig. 1, particularly depicting operation thereof and a flow of refrigerant during normal heating.
Fig. 3 is a piping diagram of the air conditioner of Fig. 1, particularly depicting operation thereof and a flow of refrigerant during defrosting/heating.
Fig. 4 is a view depicting a shape of a junction, in refrigerant piping of the air conditioner of Fig. 1, where a liquid phase refrigerant and a gas phase refrigerant join.
Fig. 5 is a view depicting a shape of a junction, in refrigerant piping of an air conditioner having refrigeration cycle equipment according to a further embodiment of the present invention, where a liquid phase refrigerant and a gas phase refrigerant join.
Fig. 6 is a piping diagram of an air conditioner having refrigeration cycle equipment according to a further embodiment of the present invention.
Fig. 7 is a view depicting a shape of a junction, in refrigerant piping of the air conditioner of Fig. 6, where a liquid phase refrigerant and a gas phase refrigerant join.
Fig. 8 is a piping diagram of conventional refrigeration cycle equipment.

### Embodiments for Carrying out the Invention

A first embodiment is directed to refrigeration cycle equipment having a compressor, an indoor heat exchanger connected to the compressor, an expansion valve connected to the indoor heat exchanger, an outdoor heat exchanger connected to the expansion valve, and a four-way valve through which the outdoor heat exchanger is connected to the compressor. The refrigeration cycle equipment includes a heat storage material disposed around the compressor to store heat generated by the compressor and a heat storage heat exchanger operable to heat exchange with heat stored in the heat storage material. The refrigeration cycle equipment further includes a first pipe for connecting the compressor to the indoor heat exchanger, a second pipe for connecting the indoor heat exchanger to the expansion valve, a third pipe for connecting the expansion valve to the outdoor heat exchanger, a fourth pipe for connecting the outdoor heat exchanger to the compressor, a fifth pipe for connecting the compressor to the third pipe, a sixth pipe for connecting the second pipe to the heat storage heat exchanger, and a seventh pipe for connecting the heat storage heat exchanger to the fourth pipe to introduce a refrigerant from the heat storage heat exchanger to the fourth pipe. In a defrosting operation for defrosting the outdoor heat exchanger, a refrigerant discharged from the compressor is introduced to the outdoor heat exchanger and to the heat storage heat exchanger via the indoor heat exchanger, and a refrigerant having passed through the outdoor heat exchanger and another refrigerant heat exchanged with the heat storage material in the heat storage heat exchanger join at a location between the four-way valve and a suction side of the compressor and are subsequently introduced to the suction side of the compressor.

By this configuration, in the defrosting operation for defrosting the outdoor heat exchanger, a refrigerant containing the liquid refrigerant returning from the outdoor heat exchanger is admixed with the high-temperature gas phase refrigerant returning from the heat storage heat exchanger and, hence, evaporation of the liquid refrigerant is promoted to thereby prevent the liquid refrigerant from returning to the compressor, thus making it possible to enhance the reliability of the compressor.

The refrigeration cycle equipment further includes an accumulator provided on the fourth pipe to separate a liquid phase refrigerant and a gas phase refrigerant, and the seventh pipe is connected to a pipe extending between the accumulator and the compressor. Accordingly, heat of the high-temperature gas phase refrigerant is effectively used for defrosting without being absorbed by the accumulator, thus making it possible to reduce the time period required for defrosting.

In a second embodiment, the seventh pipe is connected to the fourth pipe at an angle of less than 90 degrees from an upstream side of the fourth pipe. Accordingly, a resistance of flow at a junction where a refrigerant in the seventh pipe enters the fourth pipe reduces to increase a refrigerant circulation volume in a bypass piping system including the sixth pipe, the heat storage heat exchanger, and the seventh pipe, thus enabling the heat storage heat exchanger to show a sufficient heat exchanging performance and a sufficient defrosting performance.

In a third embodiment, the seventh pipe is connected to the fourth pipe so as to be substantially parallel to the fourth pipe on an upstream side of the junction between the seventh pipe and the fourth pipe, thus exerting the similar effect as in the second embodiment.

In a fourth embodiment, the refrigeration cycle equipment further includes a strainer provided between the expansion valve and a connecting portion between the second pipe and the sixth pipe. The strainer acts to prevent invasion of foreign substances into the expansion valve. Although the strainer causes a pressure loss, the provision of the strainer between the expansion valve and the connecting portion between the second pipe and the sixth pipe allows the refrigerant to easily flow toward the sixth pipe. Accordingly, the refrigerant circulation volume in the bypass piping system including the sixth pipe, the heat storage heat exchanger, and the seventh pipe increases, thus enabling the heat storage heat exchanger to show a sufficient heat exchanging performance and a sufficient defrosting performance.

Embodiments of the present invention are explained hereinafter with reference to the drawings.

### (Embodiment A)

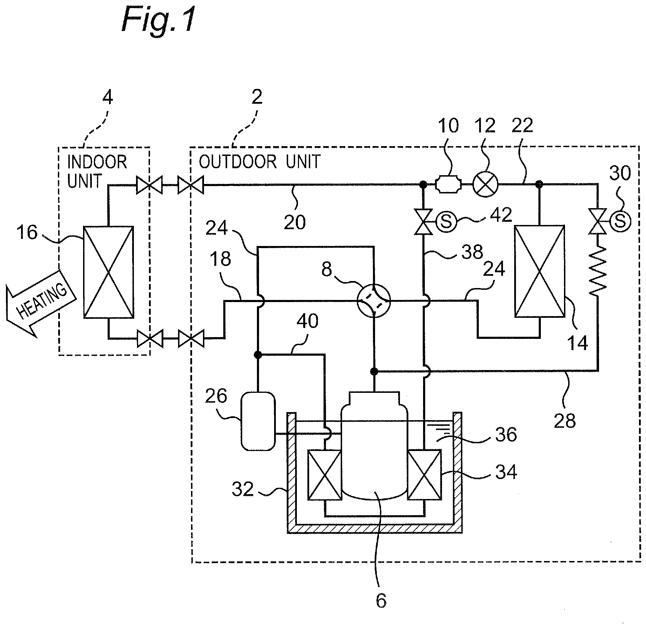

Fig. 1 depicts a piping diagram of an air conditioner having refrigeration cycle equipment according to an embodiment of the present invention. The air conditioner includes an outdoor unit 2 and an indoor unit 4 connected to each other via refrigerant piping.

As shown in Fig. 1, the outdoor unit 2 accommodates therein a compressor 6, a four-way valve 8, a strainer 10, an expansion valve 12, and an outdoor heat exchanger 14, while the indoor unit 4 accommodates an indoor heat exchanger 16 therein. Those constituent elements are connected via refrigerant piping to define a refrigeration cycle.

More specifically, the compressor 6 and the indoor heat exchanger 16 are connected to each other via a first refrigerant pipe 18 to which the four-way valve 8 is fitted, and the indoor heat exchanger 16 and the expansion valve 12 are connected to each other via a second refrigerant pipe 20 to which the strainer 10 is fitted. Also, the expansion valve 12 and the outdoor heat exchanger 14 are connected to each other via a third refrigerant pipe 22, and the outdoor heat exchanger 14 and the compressor 6 are connected to each other via a fourth refrigerant pipe 24.

The four-way valve 8 is located midway on the fourth refrigerant pipe 24, and an accumulator 26 for separating a liquid phase refrigerant and a gas phase refrigerant is provided on the fourth refrigerant pipe 24 on a refrigerant suction side of the compressor 6. The compressor 6 and the third refrigerant pipe 22 are connected to each other via a fifth refrigerant pipe 28, on which a first solenoid valve 30 is provided.

Furthermore, a heat storage tank 32 accommodating a heat storage heat exchanger 34 therein is provided around the compressor 6 and filled with a latent heat storage material (for example, ethylene glycol aqueous solution) 36 for heat exchanging with the heat storage heat exchanger 34. The heat storage tank 32, the heat storage heat exchanger 34, and the heat storage material 36 constitute a heat storage device.

Also, the second refrigerant pipe 20 and the heat storage heat exchanger 34 are connected to each other via a sixth refrigerant pipe 38, and the heat storage heat exchanger 34 and the fourth refrigerant pipe 24 are connected to each other via a seventh refrigerant pipe 40. A second solenoid valve 42 is provided on the sixth refrigerant pipe 38.

The indoor unit 4 accommodates, in addition to the indoor heat exchanger 16, a fan (not shown), vertical wind direction changing blades (not shown), and horizontal wind direction changing blades (not shown). The indoor heat exchanger 16 exchanges heat between indoor air sucked into the indoor unit 4 by the fan and a refrigerant flowing through the indoor heat exchanger 16 so that air heated or cooled by the heat exchange may be blown into a room during heating or cooling, respectively. As occasion demands, the vertical wind direction changing blades vertically change the direction of air discharged from the indoor unit 4 and the horizontal wind direction changing blades horizontally change the direction of air discharged from the indoor unit 4.

The compressor 6, the fan, the vertical wind direction changing blades, the horizontal wind direction changing blades, the four-way valve 8, the expansion valve 12, the solenoid valves 30, 42, and the like are electrically connected to and controlled by a controller (for example, a microcomputer not shown).

A relation of connection and functioning of the component parts of the above-described refrigeration cycle equipment are explained hereinafter with a flow of the refrigerant, taking the case of the heating operation.

A refrigerant discharged from a discharge port in the compressor 6 passes through the four-way valve 8 and reaches the indoor heat exchanger 16 via the first refrigerant pipe 18. The refrigerant condenses in the indoor heat exchanger 16 upon heat exchange with indoor air, leaves the indoor heat exchanger 16, and passes through the second refrigerant pipe 20 and through the strainer 10, which prevents invasion of foreign substances into the expansion valve 12, before the refrigerant reaches the expansion valve 12. The refrigerant is reduced in pressure by the expansion valve 12 and reaches the outdoor heat exchanger 14 via the third refrigerant pipe 22. The refrigerant then evaporates in the outdoor heat exchanger 14 upon heat exchange with outdoor air and passes through the fourth refrigerant pipe 24, the four-way valve 8, and the accumulator 26, before the refrigerant returns to a suction port in the compressor 6.

The fifth refrigerant pipe 28 branched from the first refrigerant pipe 18 between the discharge port in the compressor 6 and the four-way valve 8 joins the third refrigerant pipe 22 between the expansion valve 12 and the outdoor heat exchanger 14 via the first solenoid valve 30.

Furthermore, the heat storage tank 32 accommodating therein the heat storage material 36 and the heat storage heat exchanger 34 is disposed so as to encircle and contact the compressor 6 to store heat generated by the compressor 6 in the heat storage material 36. The sixth refrigerant pipe 38 branched from the second refrigerant pipe 20 between the indoor heat exchanger 16 and the strainer 10 reaches an inlet of the heat storage heat exchanger 34 via the second solenoid valve 42, and the seventh refrigerant pipe 40 extending from an outlet of the heat storage heat exchanger 34 joins the fourth refrigerant pipe 24 between the four-way valve 8 and the accumulator 26.

Although the strainer 10 is illustrated in Fig. 1 as being fitted to the second refrigerant pipe 20 between a branched portion thereof into the sixth refrigerant pipe 38 and the expansion valve 12, the strainer 10 may be fitted to the second refrigerant pipe 20 between the indoor heat exchanger 16 and the branched portion into the sixth refrigerant pipe 38 for the purpose of preventing invasion of foreign substances into the expansion valve 12.

However, the strainer 10 has pressure loss and, hence, the arrangement of the former allows the refrigerant to easily flow toward the sixth refrigerant pipe 38 at the branched portion of the second refrigerant pipe 20 into the sixth refrigerant pipe 38, thereby increasing the refrigerant circulation volume in a bypass circuit including the sixth refrigerant pipe 38, the heat storage heat exchanger 34, and the seventh refrigerant pipe 40. With the increased refrigerant circulation volume in the heat storage heat exchanger 34, even if the temperature of the heat storage material 36 is high and the heat storage heat exchanger 34 has a very high heat exchanging performance, it is unlikely that the heat storage heat exchanger 34 may become incapable of heat exchanging at a latter half thereof due to a high degree of superheat, thus allowing the heat storage heat exchanger 34 to show a sufficient heat exchanging performance and a sufficient defrosting performance.

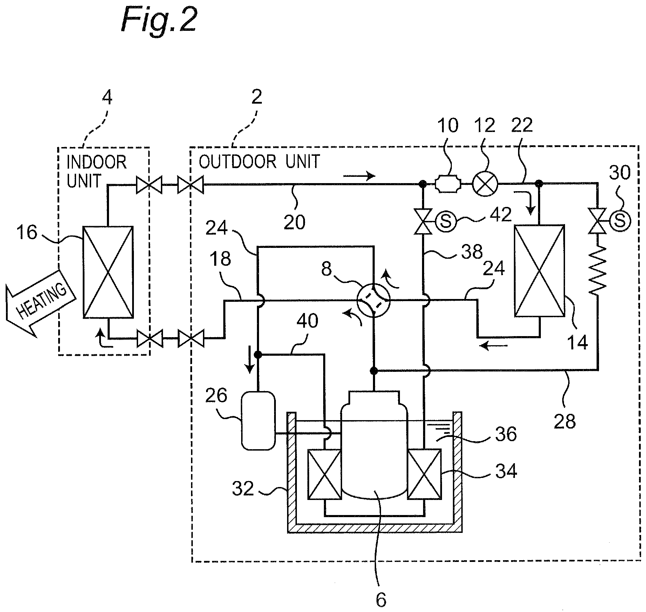

Operation of the air conditioner during normal heating is explained hereinafter with reference to Fig. 2 schematically depicting the operation of the air conditioner of Fig. 1 and a flow of the refrigerant during normal heating.

During normal heating, the first solenoid valve 30 and the second solenoid valve 42 are both closed. In this case, as described above, the refrigerant discharged from the discharge port in the compressor 6 passes through the four-way valve 8 and reaches the indoor heat exchanger 16 via the first refrigerant pipe 18. Having condensed in the indoor heat exchanger 16 upon heat exchange with indoor air, the refrigerant leaves the indoor heat exchanger 16, passes through the refrigerant pipe 20, and reaches the expansion valve 12. The refrigerant is then reduced in pressure by the expansion valve 12 and reaches the outdoor heat exchanger 14 via the third refrigerant pipe 22. Having evaporated in the outdoor heat exchanger 14 upon heat exchange with outdoor air, the refrigerant passes through the fourth refrigerant pipe 24 and through the four-way valve 8 and returns to the suction port in the compressor 6.

Heat generated by the compressor 6 is transferred from an outer wall of the compressor 6 to an outer wall of the heat storage tank 32 and stored in the heat storage material 36 accommodated in the heat storage tank 32.

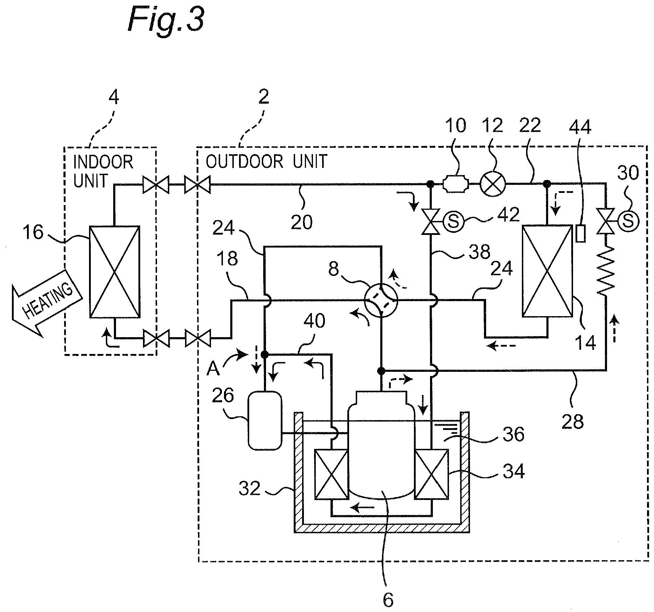

Operation of the air conditioner during defrosting/heating is next explained with reference to Fig. 3 schematically depicting the operation of the air conditioner of Fig. 1 and a flow of the refrigerant during defrosting/heating. In Fig. 3, solid arrows indicate a flow of refrigerant used for heating, and dotted arrows indicate a flow of refrigerant used for defrosting

If frost is formed and grows on the outdoor heat exchanger 14 during the above-discussed normal heating, the airflow resistance of the outdoor heat exchanger 14 increases to thereby reduce the amount of air passing therethrough, thus resulting in a reduction of the evaporating temperature in the outdoor heat exchanger 14. As shown in Fig. 3, the air conditioner according to the present invention is provided with a temperature sensor 44 for detecting a piping temperature of the outdoor heat exchanger 14, and if this temperature sensor 44 detects a reduced evaporating temperature compared with an evaporating temperature when no frost is formed, the controller outputs a command to shift the air conditioner from the normal heating operation to the defrosting/heating operation.

When the air conditioner is shifted from the normal heating operation to the defrosting/heating operation, the controller controls the first solenoid valve 30 and the second solenoid valve 42 to open them. In this case, in addition to the flow of refrigerant during the normal heating operation as discussed above, part of a gaseous refrigerant discharged from the discharge port in the compressor 6 passes through the fifth refrigerant pipe 28 and the first solenoid valve 30 and joins a refrigerant passing through the third refrigerant pipe 22 to heat the outdoor heat exchanger 14. Having condensed and turned into a liquid phase, the refrigerant passes through the fourth refrigerant pipe 24 and returns to the suction port in the compressor 6 via the four-way valve 8 and the accumulator 26.

Also, part of a liquid refrigerant diverged from the second refrigerant pipe 20 between the indoor heat exchanger 16 and the strainer 10 passes through the sixth refrigerant pipe 38 and the second solenoid valve 42 and absorbs heat from the heat storage material 36 when passing through the heat storage heat exchanger 34. The liquid refrigerant then evaporates and turns into a gas phase. The resultant gaseous refrigerant passes through the seventh refrigerant pipe 40, then joins a refrigerant passing through the fourth refrigerant pipe 24, and finally returns to the suction port in the compressor 6 via the accumulator 26.

Although the refrigerant returning to the accumulator 26 contains a liquid refrigerant returning from the outdoor heat exchanger 14, the latter is admixed with a gaseous high-temperature refrigerant returning from the heat storage heat exchanger 34 to thereby promote evaporation of the liquid refrigerant. Accordingly, it is not likely that a liquid refrigerant may pass through the accumulator 26 and return to the compressor 6, thus making it possible to enhance the reliability of the compressor 6.

At the initiation of defrosting/heating, the temperature of the outdoor heat exchanger 14 is below the freezing point by adhesion of frost, but when the outdoor heat exchanger 14 is heated by the gaseous refrigerant discharged from the discharge port in the compressor 6, frost adhering to the outdoor heat exchanger 14 melts in the vicinity of zero degree and the temperature of the outdoor heat exchanger 14 begins to increase upon termination of melting of the frost. When the temperature sensor 44 detects such a temperature rise of the outdoor heat exchanger 14, a determination is made that defrosting has been completed and the controller outputs a command to shift the defrosting/heating operation to the normal heating operation.

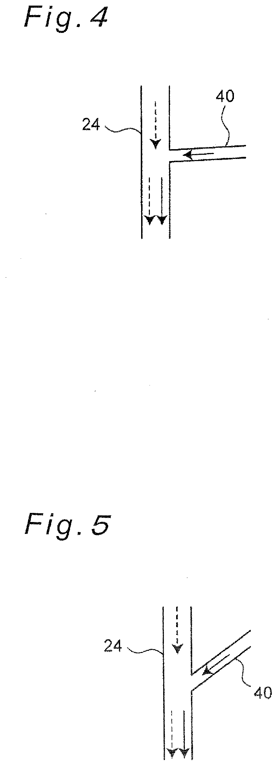

A shape of a junction (portion "A" in Fig. 3) between the seventh refrigerant pipe 40 and the fourth refrigerant pipe 24 is discussed hereinafter in detail with reference to Fig. 4.

In the case of the shape shown in Fig. 4, the seventh refrigerant pipe 40 joins the fourth refrigerant pipe 24 at an angle of about 90 degrees. This shape allows a refrigerant passing through the seventh refrigerant pipe 40 to impinge on a refrigerant within the fourth refrigerant pipe 24 and, hence, a resistance of flow at the junction where the refrigerant in the seventh refrigerant pipe 40 enters the fourth refrigerant pipe 24 increases to increase a pressure loss of a whole bypass piping system including the sixth refrigerant pipe 38, the heat storage heat exchanger 34, and the seventh refrigerant pipe 40, thus leading sometimes to a reduction in refrigerant circulation volume in the bypass piping system.

If the temperature of the heat storage material 36 is high, the heat exchanging performance of the heat storage heat exchanger 34 is very high, and if the refrigerant circulation volume in the heat storage heat exchanger 34 is small, the degree of superheat becomes high in a latter half of the heat storage heat exchanger 34, which in turn becomes incapable of heat exchanging. Accordingly, the amount of heat exchange in the heat storage heat exchanger 34 is limited, thus resulting sometimes in an insufficient defrosting performance.

### (Embodiment B)

Fig. 5 depicts another shape of the junction (portion "A" in Fig. 3) between the seventh refrigerant pipe 40 and the fourth refrigerant pipe 24 to improve the above-discussed disadvantage.

In the case of the shape shown in Fig. 5, the seventh refrigerant pipe 40 joins the fourth refrigerant pipe 24 at an angle of less than 90 degrees from an upstream side of the fourth refrigerant pipe 24. This shape has a small collision loss as compared with the shape shown in Fig. 4 when the refrigerant flowing through the seventh refrigerant pipe 40 impinges on the refrigerant within the fourth refrigerant pipe 24 and, hence, the resistance of flow at the junction where the refrigerant in the seventh refrigerant pipe 40 enters the fourth refrigerant pipe 24 reduces to reduce the pressure loss of the whole bypass piping system including the sixth refrigerant pipe 38, the heat storage heat exchanger 34, and the seventh refrigerant pipe 40, thus increasing the refrigerant circulation volume in the bypass piping system.

As a result, even if the temperature of the heat storage material 36 is high and the heat exchanging performance of the heat storage heat exchanger 34 is very high, a phenomenon in which the degree of superheat becomes high in the latter half of the heat storage heat exchanger 34, which in turn becomes incapable of heat exchanging, is unlikely to occur because of the increased refrigerant circulation volume, thus allowing the heat storage heat exchanger 34 to show a sufficient heat exchanging performance and a sufficient defrosting performance.

### (Embodiment C)

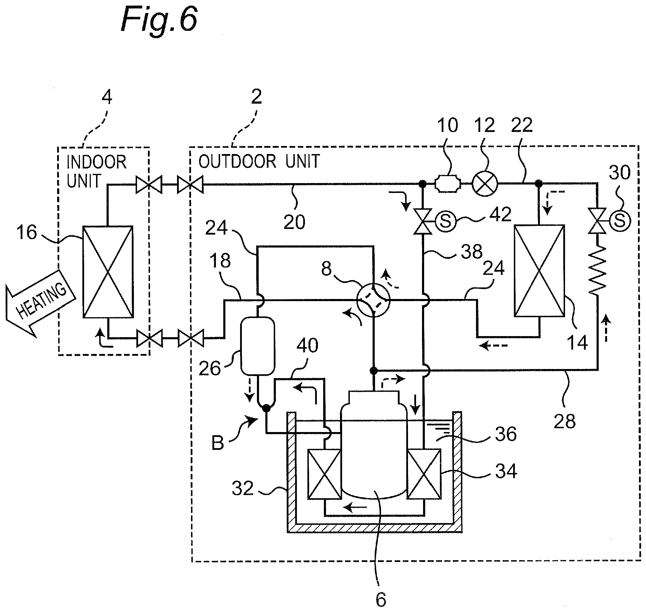

Fig. 6 depicts a refrigeration cycle having still another shape of the junction between the seventh refrigerant pipe 40 and the fourth refrigerant pipe 24, and Fig. 7 depicts the junction (portion "B" in Fig. 6) between the seventh refrigerant pipe 40 and the fourth refrigerant pipe 24.

Although the junction between the seventh refrigerant pipe 40 and the fourth refrigerant pipe 24 as shown in Fig. 3 is located between the four-way valve 8 and the accumulator 26, the junction between the seventh refrigerant pipe 40 and the fourth refrigerant pipe 24 in this embodiment is located between the accumulator 26 and the compressor 6, as shown in Fig. 6.

In the configuration shown in Fig. 3, a refrigerant that has evaporated and turned into a gas phase upon absorption of heat from the heat storage material in the heat storage heat exchanger 34 passes through the seventh refrigerant pipe 40, joins a refrigerant passing through the fourth refrigerant pipe 24 at a location between the four-way valve 8 and the accumulator 26, and returns to the suction port in the compressor 6 via the accumulator 26.

However, because the accumulator 26 has a large heat capacity and the temperature thereof is reduced prior to defrosting, a gaseous high-temperature refrigerant returning from the heat storage heat exchanger 34 during defrosting is cooled by the accumulator 26. Accordingly, sufficient heat cannot be used for defrosting, thus resulting sometimes in an increase in time period for defrosting.

On the other hand, in this embodiment, the refrigerant from the heat storage heat exchanger 34 is caused to bypass the accumulator 26 before it returns to the compressor 6. Accordingly, heat of the gaseous high-temperature refrigerant can be effectively used for defrosting, thus making it possible to reduce the time period required for defrosting.

It is to be noted that the above-described construction is not limited to this embodiment, but is applicable to the embodiment A and B referred to above.

Also, as shown in Figs. 6 and 7, the junction between the fourth refrigerant pipe 24 and the seventh refrigerant pipe 40 is substantially U-shaped and, accordingly, the seventh refrigerant pipe 40 is connected to the fourth refrigerant pipe 24 so as to be substantially parallel to the fourth refrigerant pipe 24 on an upstream side of the junction between the seventh refrigerant pipe 40 and the fourth refrigerant pipe 24. That is, the junction is designed such that a refrigerant passing through the fourth refrigerant pipe 24 joins another refrigerant passing through the seventh refrigerant pipe 40 as substantially parallel flows, thereby minimizing the collision loss of both the refrigerants.

### Industrial Applicability

Because the refrigeration cycle equipment according to the present invention can enhance the reliability of the compressor by minimizing return of a liquid refrigerant to the compressor, it is effectively applicable to air conditioners, refrigerators, water heaters, heat pump washing machines, and the like.

### Explanation of reference numerals

2 outdoor unit, 4 indoor unit, 6 compressor, 8 four-way valve,
10 strainer, 12 expansion valve, 14 outdoor heat exchanger,
16 indoor heat exchanger, 18 first refrigerant pipe,
20 second refrigerant pipe, 22 third refrigerant pipe,
24 fourth refrigerant pipe, 26 accumulator, 28 fifth refrigerant pipe,
30 first solenoid valve, 32 heat storage tank,
34 heat storage heat exchanger, 36 heat storage material,
38 sixth refrigerant pipe, 40 seventh refrigerant pipe,
42 second solenoid valve, 44 temperature sensor.

## Claims

1. Refrigeration cycle equipment having
a compressor (6),
an indoor heat exchanger (16) connected to the compressor (6),
an expansion valve (12) connected to the indoor heat exchanger (16),
an outdoor heat exchanger (14) connected to the expansion valve (12), and a four-way valve (8) through which the outdoor heat exchanger (14) is connected to the compressor (6),
the refrigeration cycle equipment comprising:
a heat storage material (36) disposed around the compressor (6) to store heat generated by the compressor (6);
a heat storage heat exchanger (34) operable to heat exchange with heat stored in the heat storage material (36);
a first pipe (18) for connecting the compressor (6) to the indoor heat exchanger (16);
a second pipe (20) for connecting the indoor heat exchanger (16) to the expansion valve (12);
a third pipe (22) for connecting the expansion valve (12) to the outdoor heat exchanger (14);
a fourth pipe (24) for connecting the outdoor heat exchanger (14) to the compressor (6);
a fifth pipe (28) for connecting the compressor (6) to the third pipe (22);
a sixth pipe (38) for connecting the second pipe (20) to the heat storage heat exchanger (34); and
a seventh pipe (40) for connecting the heat storage heat exchanger (34) to the fourth pipe (24) to introduce a refrigerant from the heat storage heat exchanger (34) to the fourth pipe (24),
**characterized in that**
in a defrosting operation for defrosting the outdoor heat exchanger (14), a refrigerant discharged from the compressor (6) is introduced to the outdoor heat exchanger (14) and to the heat storage heat exchanger (34) via the indoor heat exchanger (16); and a refrigerant having passed through the outdoor heat exchanger (14) and another refrigerant heat exchanged with the heat storage material (36) in the heat storage heat exchanger (34) join at a location between the four-way valve (8) and a suction side of the compressor (6) and are subsequently introduced to the suction side of the compressor (6), and
the refrigeration cycle equipment further comprising an accumulator provided on the fourth pipe (24) to separate a liquid phase refrigerant and a gas phase refrigerant, wherein the seventh pipe (40) is connected to a pipe extending between the accumulator and the compressor (6).

2. The refrigeration cycle equipment according to claim 1, wherein the seventh pipe (40) is connected to the fourth pipe (24) at an angle of less than 90 degrees from an upstream side of the fourth pipe (24).

3. The refrigeration cycle equipment according to claim 1, wherein the seventh pipe (40) is connected to the fourth pipe (24) so as to be substantially parallel to the fourth pipe (24) on an upstream side of the junction between the seventh pipe (40) and the fourth pipe (24).

4. The refrigeration cycle equipment according to any one of claims 1 to 3, further comprising a strainer (10) provided between the expansion valve (12) and a connecting portion between the second pipe (20) and the sixth pipe (38).

## Patentansprüche

1. Kältekreislaufvorrichtung, aufweisend
einen Kompressor (6),
einen Innen-Wärmetauscher (16), der mit dem Kompressor (6) verbunden ist,
ein Expansionsventil (12), das mit dem Innen-Wärmetauscher (16) verbunden ist,
einen Außen-Wärmetauscher (14), der mit dem Expansionsventil (12) verbunden ist, und
ein Vierwegeventil (8), durch welches der Außen-Wärmetauscher (14) mit dem Kompressor (6) verbunden ist,
wobei die Kältekreislaufvorrichtung umfasst:
ein Wärmespeichermaterial (36), das um den Kompressor (6) herum angeordnet ist, um die von dem Kompressor (6) erzeugte Wärme zu speichern;
einen wärmespeichernden Wärmetauscher (34), welcher zum Wärmeaustausch mit der in dem Wärmespeichermaterial (36) gespeicherten Wärme dient;
ein erstes Rohr (18) zum Verbinden des Kompressors (6) mit dem Innen-Wärmetauscher (16);
ein zweites Rohr (20) zum Verbinden des Innen-Wärmetauschers (16) mit dem Expansionsventil (12);
ein drittes Rohr (22) zum Verbinden des Expansionsventils (12) mit dem Außen-Wärmetauscher (14);
ein viertes Rohr (24) zum Verbinden des Außen-Wärmetauschers (14) mit dem Kompressor (6);
ein fünftes Rohr (28) zum Verbinden des Kompressors (6) mit dem dritten Rohr (22);
ein sechstes Rohr (38) zum Verbinden des zweiten Rohrs (20) mit dem wärmespeichernden Wärmetauscher (34); und
ein siebtes Rohr (40) zum Verbinden des wärmespeichernden Wärmetauschers (34) mit dem vierten Rohr (24), um Kältemittel aus dem wärmespeichernden Wärmetauscher (34) in das vierte Rohr (24) einzuleiten,
**dadurch gekennzeichnet, dass**
im Rahmen eines Abtauvorgangs zum Abtauen des Außen-Wärmetauschers (14) ein von dem Kompressor (6) abgegebenes Kältemittel über den Innen-Wärmetauscher (16) in den Außen-Wärmetauscher (14) und in den wärmespeichernden Wärmetauscher (34) eingeleitet wird; und dass ein Kältemittel, nachdem es durch den Außen-Wärmetauscher (14) hindurchgeströmt ist, und ein anderes Kältemittel, nachdem es einen Wärmeaustausch mit dem Wärmespeichermaterial (36) in dem wärmespeichernden Wärmetauscher (34) vollzogen hat, an einer Stelle zwischen dem Vierwegeventil (8) und einer Ansaugseite des Kompressors (6) zusammenströmen und anschließend ansaugseitig in den Kompressor (6) eingeleitet werden, und
die Kältekreislaufvorrichtung weiter einen Akkumulator umfasst, der an dem vierten Rohr (24) vorgesehen ist, um ein Kältemittel im flüssigen Phasenzustand und ein Kältemittel im gasförmigen Phasenzustand voneinander zu trennen, wobei das siebte Rohr (40) mit einem Rohr, welches sich zwischen dem Akkumulator und dem Kompressor (6) erstreckt, verbunden ist.

2. Kältekreislaufvorrichtung nach Anspruch 1, wobei das siebte Rohr (40) mit dem vierten Rohr (24) in einem Winkel von weniger als 90 Grad in Bezug auf eine stromaufwärts gelegene Seite des vierten Rohrs (24) verbunden ist.

3. Kältekreislaufvorrichtung nach Anspruch 1, wobei das siebte Rohr (40) derart mit dem vierten Rohr (24) verbunden ist, dass es auf einer stromaufwärts von der Verbindungsstelle zwischen dem siebten Rohr (40) und dem vierten Rohr (24) gelegenen Seite im Wesentlichen parallel mit dem vierten Rohr (24) verläuft.

4. Kältekreislaufvorrichtung nach einem der Ansprüche 1 bis 3, weiter umfassend ein Sieb (10), welches zwischen dem Expansionsventil (12) und einem Verbindungsabschnitt zwischen dem zweiten Rohr (20) und dem sechsten Rohr (38) vorgesehen ist.

## Revendications

1. Dispositif à cycle de réfrigération, lequel comprend:
un compresseur (6),
un échangeur thermique intérieur (16) qui est relié au compresseur (6),
une soupape de détente (12) qui est reliée à l'échangeur thermique intérieur (16),
un échangeur thermique extérieur (14) qui est relié à la soupape de détente (12), et
un distributeur à quatre voies (8) qui relie l'échangeur thermique extérieur (14) au compresseur (6),
ledit dispositif à cycle de réfrigération comprenant:
un matériau accumulateur de chaleur (36) qui est disposé autour du compresseur (6) afin de stocker la chaleur produite par le compresseur (6);
un échangeur thermique à accumulation de chaleur (34) qui sert à l'échange thermique avec la chaleur stockée dans le matériau accumulateur de chaleur (36);
un premier tube (18) destiné à relier le compresseur (6) à l'échangeur thermique intérieur (16);
un deuxième tube (20) destiné à relier l'échangeur thermique intérieur (16) à la soupape de détente (12);
un troisième tube (22) destiné à relier la soupape de détente (12) à l'échangeur thermique extérieur (14);
un quatrième tube (24) destiné à relier l'échangeur thermique extérieur (14) au compresseur (6);
un cinquième tube (28) destiné à relier le compresseur (6) au troisième tube (22);
un sixième tube (38) destiné à relier le deuxième tube (20) à l'échangeur thermique à accumulation de chaleur (34); et
un septième tube (40) destiné à relier l'échangeur thermique à accumulation de chaleur (34) au quatrième tube (24) afin d'amener de l'agent réfrigérant en provenance de l'échangeur thermique à accumulation de chaleur (34) dans le quatrième tube (24),
**caractérisé en ce que**
dans le cadre d'une opération de dégivrage destiné à dégivrer l'échangeur thermique extérieur (14), un agent réfrigérant refoulé par le compresseur (6) est amené dans l'échangeur thermique extérieur (14) et dans l'échangeur thermique à accumulation de chaleur (34) par l'intermédiaire de l'échangeur thermique intérieur (16); et **en ce qu'**un agent réfrigérant, après avoir traversé l'échangeur thermique extérieur (14), et un autre agent réfrigérant, après avoir accompli un échange thermique avec le matériau accumulateur de chaleur (36) dans l'échangeur thermique à accumulation de chaleur (34), se rencontrent à un point donné entre le distributeur à quatre voies (8) et un côté aspiration du compresseur (6) et sont ensuite introduits, côté aspiration, dans ledit compresseur (6), et
ledit dispositif à cycle de réfrigération comprend en outre un accumulateur qui est prévu sur le quatrième tube (24) afin de séparer l'un de l'autre un agent réfrigérant en phase liquide et un agent réfrigérant en phase gazeuse, le septième tube (40) étant relié à un tube qui s'étend entre l'accumulateur et le compresseur (6).

2. Dispositif à cycle de réfrigération selon la revendication 1, dans lequel le septième tube (40) est relié au quatrième tube (24) de manière à former un angle inférieur à 90 degrés par rapport à un côté dudit quatrième tube (24) qui est situé en amont.

3. Dispositif à cycle de réfrigération selon la revendication 1, dans lequel le septième tube (40) est relié au quatrième tube (24) de sorte à s'étendre, sur un côté situé en amont du point de jonction entre le septième tube (40) et le quatrième tube (24), essentiellement de manière parallèle audit quatrième tube (24).

4. Dispositif à cycle de réfrigération selon l'une quelconque des revendications 1 à 3, lequel comprend en outre un filtre (10) qui est prévu entre la soupape de détente (12) et une partie de jonction située entre le deuxième tube (20) et le sixième tube (38).
